# EUROPÄISCHE PATENTSCHRIFT

(11) **EP 1 580 046 B1**
(45) Veröffentlichungstag und Bekanntmachung des Hinweises auf die Patenterteilung: **19.03.2008**
(21) Anmeldenummer: 04025256.1
(22) Anmeldetag: 23.10.2004
(51) Int. Cl.: B60G 21/055

(54) **Doppelter Schwenkmotor und Verfahren zur Ansteuerung**
Double torque actuator and corresponding control method
Moteur rotatif double et méthode de contrôle correspondante

(30) Priorität: 17.01.2004 DE 102004002550
(43) Veröffentlichungstag der Anmeldung: 28.09.2005
(73) Patentinhaber: Dr. Ing. h.c. F. Porsche Aktiengesellschaft, 70435 Stuttgart (DE)
(72) Erfinder: Semmel, Dieter, 71686 Remseck (DE); Klatte, Heiner, 71665 Vaihingen Enz (DE)

(56) Entgegenhaltungen:
- WO-A-03/045719
- DE-A1- 10 242 552
- DE-A1- 19 802 489
- DE-A1- 19 930 444
- PATENT ABSTRACTS OF JAPAN Bd. 017, Nr. 430 (M-1460), 10. August 1993 (1993-08-10) & JP 05 092715 A (KAYABA IND CO LTD), 16. April 1993 (1993-04-16)

## Beschreibung

Die Erfindung betrifft einen Schwenkmotor für Stabilisatoren in Kraftfahrzeugen und ein Verfahren zur Ansteuerung des Schwenkmotors.

Beispielsweise aus der gattungsgemäßen DE 43 37 815 C1 ist ein Schwenkmotor für Stabilisatoren in Kraftfahrzeugen bekannt, der zwischen zwei Stabilisatorhälften angeordnet ist und die Stabilisatorhälften gegeneinander verschwenken kann. Dadurch ist es möglich, Wankbewegungen des Fahrzeuges auszugleichen. Der Stabilisator besteht aus einem Gehäuse, in dem ein Rotor schwenkbar gehalten ist. Zwischen Flügeln des Rotors und Flügeln des Gehäuses sind Kammern gebildet, die bei Druckbeaufschlagung zu eine Verschwenken des Rotors gegenüber dem Gehäuse führen. Das Gehäuse ist dabei mit der ersten Stabilisatorhälfte und der Rotor mit der zweiten Stabilisatorhälfte verbunden.

Ausgehend von diesem Stand der Technik ist es Aufgabe der Erfindung, einen Schwenkmotor für einen Stabilisator zu schaffen, der auch einen Nickausgleich erlaubt.

Erfindungsgemäß wird diese Aufgabe mit den Merkmalen des Patentanspruches 1 gelöst. Es wird vorgeschlagen, eine Vorrichtung zum Verschwenken des Gehäuses des Schwenkmotors gegenüber der Karosserie vorzusehen. Durch die zusätzlich geschaffene Bewegungsmöglichkeit können die Stabilisatorhälften nun auch einzeln oder gemeinsam gegenüber der Karosserie um die Stabilisatorachse verschwenkt werden, so dass an jedem Rad des Fahrzeuges zusätzliche Kräfte auf- oder abgebaut werden können. Auf diese Weise ist neben dem Wankausgleich auch ein Nickausgleich möglich. Bevorzugt erfolgt eine Ansteuerung in der Weise, dass der Schwenkmotor im Sinne eines Wankausgleiches und die Vorrichtung zum Verschwenken des Gehäuses des Schwenkmotors im Sinne eines Nickausgleich angesteuert wird.

Vorteilhafte Weiterbildungen der Erfindung sind in den Unteransprüchen beschrieben.

So wird vorgeschlagen, zum Verschwenken des Schwenkmotors gegenüber der Karosserie einen zweiten Schwenkmotor zu verwenden, der am Gehäuse des ersten Schwenkmotors angreift. Vorteilhafter Weise ist dabei das Gehäuse des ersten Schwenkmotors Bestandteil des zweiten Schwenkmotors, so dass die Zahl der notwendigen Bauteile reduziert ist. Insbesondere kann das Gehäuse des ersten Schwenkmotors als Rotor des zweiten Schwenkmotors verwendet sein.

Wenn ein zweiter Schwenkmotor vorgesehen ist, so kann dessen Gehäuse in vorteilhafter Weise Bestandteil eines Achs-Querträgers sein. Durch diesen Aufbau werden Baugewicht und Bauraum gespart; gleichzeitig kann ein ansonsten notwendiges Koppelglied zwischen dem Gehäuse des zweiten Schwenkmotors und der Karosserie eingespart werden.

Die Erfindung ist nachstehend anhand des in den Fig. dargestellten Ausführungsbeispieles näher erläutert.

Es zeigen:
- Fig. 1: Die Anordnung eines erfindungsgemäßen Schwenkmotors in einem Fahrzeug eines Kraftfahrzeuges und
- Fig. 2: einen Hauptschnitt durch den erfindungsgemäßen Schwenkmotor.

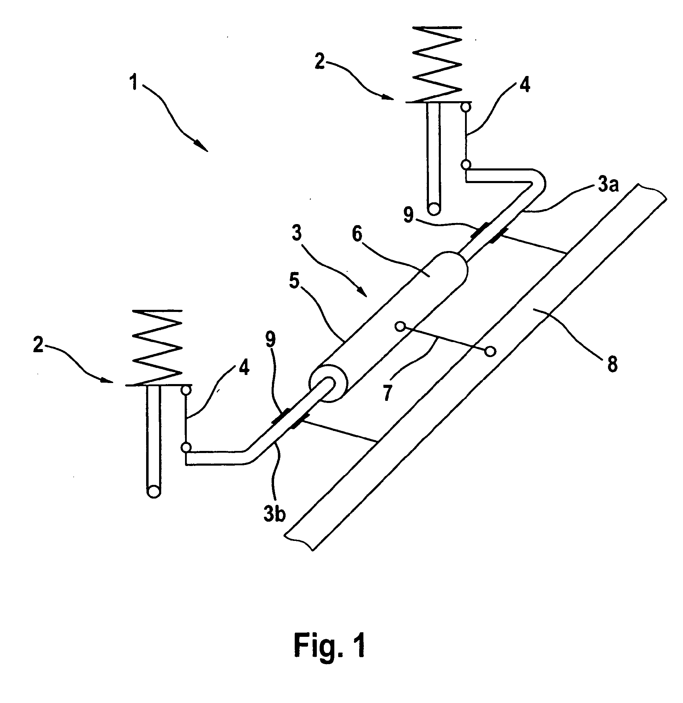

Fig. 1 zeigt schematisch eine Vorderachse 1 eines nicht näher gezeigten Kraftfahrzeuges mit McPherson Federbeinen 2, die über einen Stabilisator 3 miteinander gekoppelt sind. Der Stabilisator 3 weist zwei Stabilisatorhälften 3a und 3b auf, die jeweils über Koppelglieder 4 mit den Federbeinen 2 verbunden sind. Zwischen den Stabilisatorhälften 3a und 3b ist ein Schwenkmotor 5 angeordnet. Ein äußeres Gehäuse 6 des Schwenkmotors 5 ist über ein weiteres Koppelglied 7 mit einem Querträger 8 des Fahrwerks oder einem anderen karosseriefesten Bauteil verbunden. Die Stabilisatorhälften 3a, 3b sind in Lagern 9 schwenkbar gehalten, wobei die Lager 9 ebenfalls am Querträger 8 oder einem anderen karosserie- bzw. fahrwerksfesten Bauteil gehalten sind.

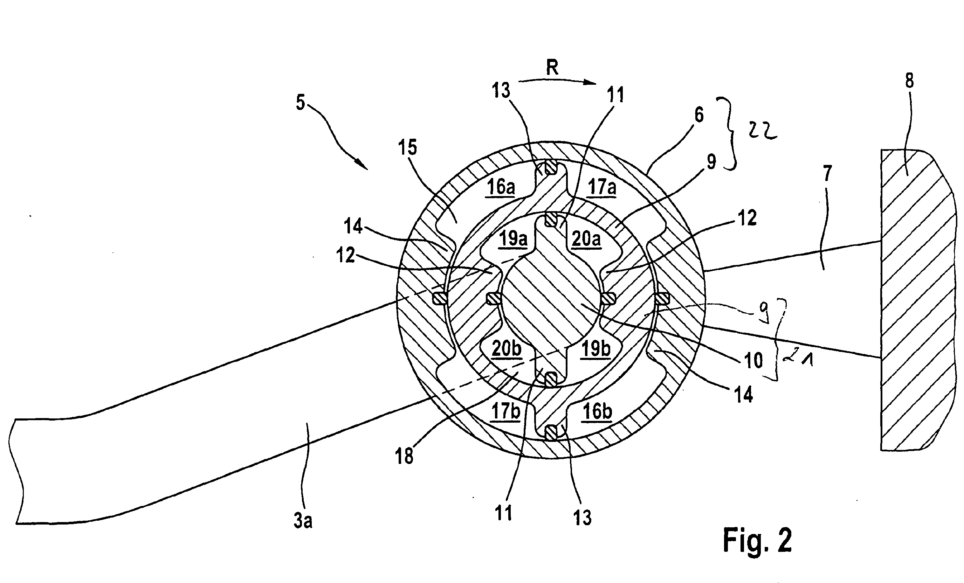

Fig. 2 zeigt den Schwenkmotor 5 im Hauptschnitt. Im äußeren Gehäuse 6 ist ein inneres Gehäuse 9 drehbar gelagert. Das innere Gehäuse 9 nimmt seinerseits einen Rotor 10 auf. Das innere Gehäuse 9 ist mit der ersten Stabilisatorhälfte 3a, der Rotor 10 mit der zweiten Stabilisatorhälfte 3b drehfest verbunden. Der Rotor 10 ist an seiner Außenseite mit Flügeln 11 versehen. Das innere Gehäuse 9 weist an seiner Innenseite Flügel 12 und an seiner Außenseite Flügel 13 auf. Das äußere Gehäuse 6 weist an seiner Innenseite Flügel 14 auf.

Ein zwischen dem äußeren Gehäuse 6 und dem inneren Gehäuse 9 gebildeter Ringraum 15 ist durch die Flügel 13, 14 in Kammern 16a, 16b, 17a, 17b unterteilt. Jeweils gegenüberliegende Kammern 16a, 16b und 17a, 17b sind miteinander verbunden und werden gemeinsam mit Druckflüssigkeit beaufschlagt. Eine Druckbeaufschlagung der Kammern 16 führt beispielsweise zu einem Verschwenken des inneren Gehäuses 9 in Pfeilrichtung R. Da das äußere Gehäuse 6 über das Koppelglied 7 karosseriefest gehalten ist, bedeutet dies gleichzeitig ein Verschwenken des inneren Gehäuses 9 gegenüber der Karosserie, hier dem Querträger 8, in Pfeilrichtung R.

In gleicher Weise ist zwischen dem inneren Gehäuse 9 und dem Rotor 10 ein Ringraum 18 gebildet, der durch die Flügel 11, 12 in Kammern 19a, 19b, 20a, 20b unterteilt ist. Durch eine Druckbeaufschlagung der gegenüberliegenden Kammern 19 wird der Rotor 10 gegenüber dem inneren Gehäuse 9 in Pfeilrichtung R verschwenkt.

Die Druckmittelzuleitungen zu den Kammern 16, 17, 19 und 20 sind nicht näher dargestellt und erfolgen in bekannter Weise über Schlauchleitungen.

Die Wirkung des Schwenkmotors 5 ist wie folgt: Das innere Gehäuse 9 und der Rotor 10 bilden einen an sich bekannten ersten Schwenkmotor 21, der die Bewegung der beiden Stabilisatorhälften 3a, 3b zueinander kontrolliert. Solange keine der äußeren Kammern 16, 17 mit Druck beaufschlagt ist, kann sich der Stabilisator 3 frei gegenüber der Karosserie 8 des Fahrzeuges verschwenken, wobei die Drehwinkelposition der Stabilisatorhälften 3a, 3b zueinander durch die Position des ersten Schwenkmotors 21 bestimmt ist.

Ein zweiter Schwenkmotor 22 ist durch das äußeren Gehäuse 6 und das innere Gehäuse 9 gebildet, wobei das innere Gehäuse 9 als Rotor zum äußeren Gehäuse 6 wirkt. Bei Druckbeaufschlagung des zweiten Schwenkmotors 22 ist die Bewegungsmöglichkeit des ersten Schwenkmotors 21 eingeschränkt. Der erste Schwenkmotor 21 kann gegenüber der Karosserie 8 festgelegt oder verschwenkt werden.

Der zweite Schwenkmotor 22 wirkt dabei nur auf die erste Stabilisatorhälfte 3a direkt, da diese mit dem inneren Gehäuse 9 drehfest verbunden ist. Durch Druckbeaufschlagung des zweiten Schwenkmotors 22 kann also die Radaufstandskraft an dem mit der ersten Stabilisatorhälfte 3a verbundenen Federbein 2 direkt beeinflusst werden; die Größe der Beeinflussung ergibt sich aus der Drehsteifigkeit der ersten Stabilisatorhälfte 3a und dem Schwenkwinkel der Stabilisatorhälfte 3a gegenüber einer neutralen, kraftfreien Position.

Die Bewegung der zweiten Stabilisatorhälfte 3b gegenüber der Karosserie 8 erfolgt indirekt über beide Schwenkmotoren 21,22. So müssen, um nur die erste Stabilisatorhälfte 3a zu bewegen und die zweite Stabilisatorhälfte 3b in ihrer Position festzuhalten, die beiden Schwenkmotoren 21,22 gegensinnig angesteuert werden.

Bevorzugt werden die beiden Schwenkmotoren 21,22 aber in der Weise angesteuert, dass der erste Schwenkmotor 21 im Sinne eines Wankausgleiches und der zweite Schwenkmotor 22 im Sinne eines Nickausgleiches angesteuert wird. Beide Ausgleichsfunktionen sind durch die beiden Schwenkmotoren 21,22 in vorteilhafter Weise getrennt voneinander ansteuerbar.

## Patentansprüche

1. Schwenkmotor für einen Stabilisator (3) eines Kraftfahrzeuges, wobei der Stabilisator aus zwei Stabilisatorhälften (3a, 3b) besteht und ein Gehäuse (9) des Schwenkmotors (21) mit der ersten Stabilisatorhälfte (3a) und ein Rotor (10) des Schwenkmotors mit der zweiten Stabilisatorhälfte (3b) verbunden ist, **dadurch gekennzeichnet, dass** eine Vorrichtung (22) zum Verschwenken des Gehäuses (9) des Schwenkmotors gegenüber der Karosserie (8) vorgesehen ist.

2. Schwenkmotor nach Anspruch 1, **dadurch gekennzeichnet, dass** zum Verschwenken des ersten Schwenkmotors (21) gegenüber der Karosserie (8) ein zweiter Schwenkmotor (22) vorgesehen ist.

3. Schwenkmotor nach Anspruch 2, **dadurch gekennzeichnet, dass** das Gehäuse (9) des ersten Schwenkmotors (21) als Rotor des zweiten Schwenkmotors (22) verwendet ist.

4. Schwenkmotor nach Anspruch 2 oder 3, **dadurch gekennzeichnet, dass** das Gehäuse (6) des zweiten Schwenkmotors (22) Bestandteil eines Achs-Querträgers (8) ist.

5. Verfahren zur Ansteuerung eines Schwenkmotors nach Anspruch 1, **dadurch gekennzeichnet, dass** der erste Schwenkmotor (21) im Sinne eines Wankausgleiches und eine Vorrichtung (22) zum Verschwenken des Gehäuses (9) des ersten Schwenkmotors im Sinne eines Nickausgleich angesteuert wird.

## Claims

1. Swivel motor for a stabilizer (3) of a motor vehicle, with the stabilizer being composed of two stabilizer halves (3a, 3b) and with a housing (9) of the swivel motor (21) being connected to the first stabilizer half (3a) and a rotor (10) of the swivel motor being connected to the second stabilizer half (3b), **characterized in that** a device (22) for pivoting the housing (9) of the swivel motor with respect to the body (8) is provided.

2. Swivel motor according to Claim 1, **characterized in that** a second swivel motor (22) is provided for pivoting the first swivel motor (21) with respect to the body (8).

3. Swivel motor according to Claim 2, **characterized in that** the housing (9) of the first swivel motor (21) is used as a rotor of the second swivel motor (22) .

4. Swivel motor according to Claim 2 or 3, **characterized in that** the housing (6) of the second swivel motor (22) is a constituent part of an axle cross member (8).

5. Method for activating a swivel motor according to Claim 1, **characterized in that** the first swivel motor (21) is activated for the purpose of roll compensation and a device (22) for pivoting the housing (9) of the first swivel motor is activated for the purpose of pitch compensation.

## Revendications

1. Moteur rotatif pour un stabilisateur (3) d'un véhicule automobile, dans lequel le stabilisateur se compose de deux moitiés de stabilisateur (3a, 3b) et un boîtier (9) du moteur rotatif (21) est connecté à la première moitié de stabilisateur (3a) et un rotor (10) du moteur rotatif est connecté à la deuxième moitié du stabilisateur (3b), **caractérisé en ce que** l'on prévoit un dispositif (22) pour faire pivoter le boîtier (9) du moteur rotatif par rapport à la carrosserie (8).

2. Moteur rotatif selon la revendication 1, **caractérisé en ce que** pour faire pivoter le premier moteur rotatif (21) par rapport à la carrosserie (8), on prévoit un deuxième moteur rotatif (22).

3. Moteur rotatif selon la revendication 2, **caractérisé en ce que** le boîtier (9) du premier moteur rotatif (21) est utilisé en tant que rotor du deuxième moteur rotatif (22).

4. Moteur rotatif selon la revendication 2 ou 3, **caractérisé en ce que** le boîtier (6) du deuxième moteur rotatif (22) fait partie d'un support axial transversal (8).

5. Procédé pour commander un moteur rotatif selon la revendication 1, **caractérisé en ce que** le premier moteur rotatif (21) est commandé dans le sens d'un équilibrage du roulis et un dispositif (22) pour faire pivoter le boîtier (9) du premier moteur rotatif est commandé dans le sens d'un équilibrage du tangage.
